(19) Europäisches Patentamt

European Patent Office

Office européen des brevets

(11) **EP 1 219 001 B1**

## (12) EUROPÄISCHE PATENTSCHRIFT

(45) Veröffentlichungstag und Bekanntmachung des Hinweises auf die Patenterteilung:
**18.01.2006 Patentblatt 2006/03**

(21) Anmeldenummer: **00982939.1**

(22) Anmeldetag: **27.09.2000**

(51) Int Cl.:
*H02J 3/24* *(2006.01)*

(86) Internationale Anmeldenummer:
**PCT/DE2000/003434**

(87) Internationale Veröffentlichungsnummer:
**WO 2001/024343 (05.04.2001 Gazette 2001/14)**

(54) **VERFAHREN ZUM ERKENNEN EINER PENDELUNG IN EINEM ELEKTRISCHEN ENERGIEVERSORGUNGSNETZ**

METHOD FOR RECOGNIZING AN OSCILLATION IN AN ELECTRIC SUPPLY NETWORK

PROCEDE DE RECONNAISSANCE D'UN MOUVEMENT PENDULAIRE DANS UN RESEAU DE DISTRIBUTION ELECTRIQUE

(84) Benannte Vertragsstaaten:
**DE FR GB IT**

(30) Priorität: **30.09.1999 DE 19948694**

(43) Veröffentlichungstag der Anmeldung:
**03.07.2002 Patentblatt 2002/27**

(73) Patentinhaber: **SIEMENS AKTIENGESELLSCHAFT**
**80333 München (DE)**

(72) Erfinder:
• **RISSLAND, Volker**
  **16727 Marwitz (DE)**
• **JURISCH, Andreas**
  **16727 Schwante (DE)**
• **HOLBACH, Jürgen**
  **91077 Neunkirchen (DE)**

(56) Entgegenhaltungen:
**EP-A- 0 724 319        DE-A- 4 100 646**
**DE-C- 19 746 719**

EP 1 219 001 B1

**Beschreibung**

Die Erfindung betrifft ein Verfahren zum Erzeugen von mindestens einem eine Pendelung in einem elektrischen Energieversorgungsnetz anzeigenden Signal (Pendelsignal), bei dem von mindestens einer Phase des Energieversorgungsnetzes jeweils Phasenstrom und Phasenspannung unter Bildung von Phasenstrom- und Phasenspannungsabtastwerten abgetastet werden, aus den Phasenstrom- und Phasenspannungsabtastwerten Impedanzwerte gebildet werden, die Impedanzwerte auf das Vorliegen einer Pendelung hin überwacht werden und bei Erkennung einer Pendelung mindestens ein Speicherelement gesetzt und an dessen Ausgang das Pendelsignal ausgegeben wird, nach Setzen des Speicherelementes weitere Impedanzwerte dahingehend überprüft werden, ob die festgestellte Pendelung noch anhält, bei Anhalten der Pendelung das Speicherelement unbeeinflußt bleibt und beim Aufhören der Pendelung das Speicherelement zurückgesetzt wird.

Ein derartiges Verfahren ist in der deutschen Offenlegungsschrift DE 195 03 626 A1 beschrieben. Bei diesem Verfahren werden nach dem Setzen des Speicherelementes weitere Impedanzwerte auf das Anhalten der festgestellten Pendelung hin überprüft, indem die zeitliche Änderung der Größe jeweils aufeinanderfolgender Impedanzwerte ermittelt wird und bei einer oberhalb eines Grenzwertes liegenden zeitlichen Änderung ein Aufhören der Pendelung erkannt und das Speicherelement zurückgesetzt wird. Die Festlegung eines solchen Grenzwertes erweist sich als schwierig, insbesondere dann, wenn in den Energieversorgungsnetzen eine Vielzahl von Generatoren verbunden sind und dadurch komplizierte Pendelungen entstehen können.

Der Erfindung liegt die Aufgabe zugrunde, ein Verfahren anzugeben, mit dem stets sicher und zuverlässig das Pendelverhalten eines elektrischen Energieversorgungsnetzes festgestellt werden kann.

Diese Aufgabe wird bei einem Verfahren der eingangs angegebenen Art erfindungsgemäß dadurch gelöst, daß bei der Überprüfung der weiteren Impedanzwerte ein Pendel-Modell benutzt wird, das aus vergangenen, zur Pendelung gehörenden Impedanzwerten oder aus von diesen Impedanzwerten abhängigen Größen gebildet ist; danach wird überprüft, ob ein aktuell gebildeter weiterer Impedanzwert oder eine von diesem weiteren Impedanzwert abhängige Größe vom Pendel-Modell abweicht, und es wird ein Auftreten eines weiteren Impedanzwertes oder einer von diesem Impedanzwert abhängigen Größe, welche von dem Pendel-Modell abweichen, als ein Aufhören der Pendelung gewertet.

Ein wesentlicher Vorteil des erfindungsgemäßen Verfahrens besteht darin, daß mit dem Pendel-Modell auch komplizierte Pendelungen beschrieben werden können und somit auch bei solchen komplizierten Pendelungen mit einer hohen Zuverlässigkeit das Aufhören der Pendelung erkannt werden kann.

Das Pendel-Modell kann vorteilhafterweise mittels eines Least-Squares-Schätzverfahrens ermittelt werden. Mit diesem Schätzverfahren kann aus aufeinanderfolgenden Impedanzwerten, welche nach dem Setzen des Speicherelementes, also nach Beginn der Pendelung gebildet wurden, ein mathematisches Pendel-Modell erzeugt werden.

Für dieses Pendel-Modell kann als Modellansatz eine Funktion der Form $f(x) = ax^3 + bx^2 + cx + d$ mit den Parametern a, b, c und d verwendet werden, bei der ein oder mehrere Parameter vor Beginn des Schätzverfahrens als Null festgelegt werden können. Somit können als Modellansatz Potenzfunktionen erster, zweiter oder dritter Ordnung angewandt werden. Weiterhin kann als Modellansatz für das Pendel-Modell eine Summe aus zeitlich abklingenden Sinus- und Cosinusfunktionen verwendet werden. Mit diesen Modellansätzen ist es möglich, auch komplizierte Pendelungen mathematisch zu beschreiben.

Das Pendel-Modell kann direkt für die ermittelten Impedanzwerte der Pendelung oder auch für von diesen Impedanzwerten abhängige Größen gebildet werden. Als abhängige Größen können Resistanzwerte R, Reaktanzwerte X, zeitliche Ableitungswerte dZ/dt der Impedanz, zeitliche Ableitungswerte dR/dt einer Resistanz oder zeitliche Ableitungswerte dx/dt einer Reaktanz verwendet werden. Durch Wahl der am besten geeigneten Größe für das Pendel-Modell kann das Aufhören der Pendelung mit einer hohen Zuverlässigkeit bestimmt werden, wobei die Wahl der Größe von der individuellen Netzkonfiguration des elektrischen Energieversorgungsnetzes abhängt.

In einer vorteilhaften Ausführungsform der Erfindung können aus den Phasenstrom- und Phasenspannungsabtastwerten Mitsystemimpedanzwerte gebildet werden, und für alle Phasen des Energieversorgungsnetzes ein gemeinsames Speicherelement bereitgestellt und ein gemeinsames Pendelsignal erzeugt werden. Diese Variante ist anwendbar, wenn eine Aussage über eine in allen Phasen des Energieversorgungsnetzes gleichzeitig auftretende Pendelung getroffen werden soll.

In einer weiteren vorteilhaften Ausführungsform des erfindungsgemäßen Verfahrens können aus den Phasenstrom- und Phasenspannungsabtastwerten jeweils einer auf Pendelung zu untersuchenden Phase des Energieversorgungsnetzes Phasen-Impedanzwerte gebildet und für jede dieser Phasen ein eigenes Speicherelement bereitgestellt und ein eigenes Pendelsignal erzeugt werden. In dieser Ausführungsform kann für jede einzelne Phase des Energieversorgungsnetzes getrennt das Pendelverhalten untersucht, also sowohl der Beginn als auch das Aufhören einer Pendelung erkannt werden. Dies ist insbesondere dann vorteilhaft, wenn Pendelungen nur in einigen, nicht aber in allen Phasen des Energieversorgungsnetzes auftreten. Häufig treten derartige Pendelungen bei sog. einpoligen Pausen in Hochspannungsnetzen auf. Ursache für die Erzeugung von einpoligen Pausen sind die in Hochspannungsnetzen häufig anzutreffenden einpoligen Leiter-Erde-Fehler, bei denen ein Lichtbogen zwischen einem Leiter und der Erde gezündet wird. Bei diesem Fehler erzeugt man eine einpolige Pause, d. h. man schaltet die eine Phase, in der der einpolige Leiter-Erde-Fehler aufgetreten ist, kurzzeitig ab. Dadurch erlischt der Lichtbogen und der Fehler ist oftmals behoben. Durch das einpolige Abschalten einer Phase kann es in den verbleibenden nicht abgeschalteten Phasen zu Pendelungen kommen. Diese Pendelungen können beispielsweise nicht über eine Überwachung der Mitsystemimpedanzwerte erkannt werden, da Mitsystemimpedanzwerte nur bei Vorliegen von Abtastwerten aller Phasen des Energieversorgungsnetzes gebildet werden können. Im Falle einer einpoligen Pause ist es nun sehr vorteilhaft, wenn man für jede Phase des Energieversorgungsnetzes ein eigenes Pendelsignal erzeugen kann; während der einpoligen Pause wird dieses Pendelsignal nur für die nicht abgeschalteten Phasen erzeugt. Das Pendelverhalten des Energieversorgungsnetzes kann also für jede Phase individuell und unabhängig vom Zustand anderer Phasen bestimmt werden.

Die Phasen-Impedanzwerte der einzelnen Phasen des elektrischen Energieversorgungsnetzes können beispielsweise gebildet werden, indem zur Bildung der Phasen-Impedanzwerte

- aus den Phasenstrom- und Phasenspannungsabtastwerten (i, u) der jeweiligen Phase eine den Realteil der Phasenspannungsabtastwerte enthaltende Größe U_re, eine den Imaginärteil der Phasenspannungsabtastwerte enthaltende Größe U_im, eine den Realteil der Phasenstromabtastwerte enthaltende Größe I_re und eine den Imaginärteil der Phasenstromabtastwerte enthaltende Größe I_im erzeugt wird,
- eine Phasen-Wirkleistungsgröße P gemäß
  $P = U\_re·I\_re - U\_im·I\_im$ ermittelt wird,
- eine Phasen-Blindleistungsgröße Q gemäß
  $Q = U\_im·I\_re + U\_im·I\_re$ ermittelt wird,
- eine quadrierte Phasenstromamplitudengröße $I^2$ gemäß
  $I^2 = I\_re·I\_re + I\_im·I\_im$ ermittelt wird,
- mittels jeweils eines Least-Squares-Abschätzverfahrens netzfrequente Anteile aus der Phasen-Wirkleistungsgröße P, der Phasen-Blindleistungsgröße Q und der quadrierten Phasenstromamplitudengröße $I^2$ entfernt werden und
- Phasen-Resistanzwerte R gemäß $R=P/I^2$ sowie Phasen-Reaktanzwerte X gemäß $X=Q/I^2$ und damit Phasen-Impedanzwerte $Z=R+jX$ ermittelt werden.

Bei der Bildung der Phasen-Impedanzwerte ist insbesondere die Entfernung der netzfrequenten Anteile (z.B. 50-Hz-Anteile) aus der Phasen-Wirkleistungsgröße P, der Phasen-Blindleistungsgröße Q und der quadrierten Phasenstromamplitudengröße $I^2$ mittels jeweils eines Least-Squares-Abschätzverfahrens von Vorteil. Derartige netzfrequente Störanteile würden die Auswertung der aus diesen Größen ermittelten Phasen-Impedanzwerte beeinträchtigen.

Zur weiteren Erläuterung der Erfindung sind in

Figur 1 ein Blockschaltbild eines Ausführungsbeispiels des erfindungsgemäßen Verfahrens, in
Figur 2 ein Blockschaltbild der Bestimmung der Phasen-Impedanzwerte, in
Figur 3 die Impulsantworten der zur Impedanzbestimmung verwendeten Filter, in
Figur 4 Wirk- und Blindleistungsgrößenverläufe vor der Filterung und in
Figur 5 Wirk- und Blindleistungsgrößenverläufe nach der Filterung gezeigt.

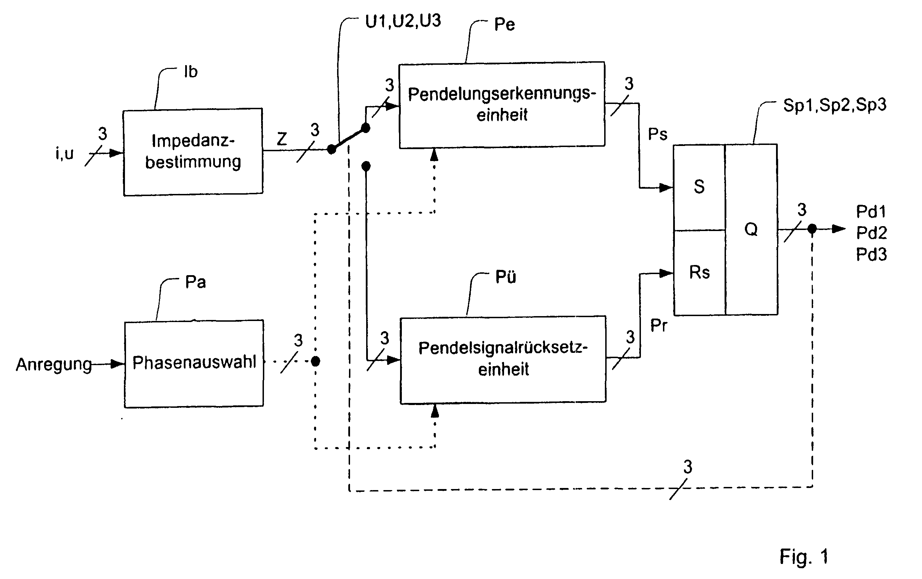

In Figur 1 ist schematisch ein Verfahren zur Bestimmung des Pendelverhaltens eines dreiphasigen elektrischen Energieversorgungsnetzes gezeigt, mit dem für jede Phase des Energieversorgungsnetzes ein eigenes Pendelsignal Pd1, Pd2 und Pd3 erzeugt wird. Dazu sind drei Umschalter U1, U2 und U3 und drei Speicherelemente Sp1, Sp2 und Sp3 vorhanden; die Verbindungsleitungen zwischen den einzelnen Einheiten des Schemas sind dreipolig ausgeführt. Die Phasenstrom- und Phasenspannungsabtastwerte i und u aller drei Phasen werden einer Einheit zur Impedanzbestimmung Ib zugeführt, an deren Ausgang Phasen-Impedanzwerte Z der drei Phasen ausgegeben werden. Diese Phasen-Impedanzwerte Z werden über die Umschalter U1, U2 und U3 einer Pendelungserkennungseinheit Pe zugeführt. Die Pendelungserkennungseinheit Pe erkennt aus den zeitlichen Verläufen der Phasen-Impedanzwerte Z das Auftreten einer Pendelung in den einzelnen Phasen, z.B. in Phase 1, und gibt an ihrem Ausgang für jede Phase mit erkannter Pendelung, z.B. für Phase 1, ein Pendelsetzsignal Ps aus. Das Pendelsetzsignal Ps setzt das der jeweiligen Phase zugeordnete Speicherelement, z.B. Sp1, welches an seinem Ausgang das phasenindividuelle Pendelsignal, z.B. Pd1, ausgibt. Bei einem ausgegebenen Pendelsignal , z.B. bei Pendelsignal Pd1, wird der der jeweiligen Phase zugeordnete Umschalter, z.B. U1, umgeschaltet. Die weiterhin gebildeten Phasen-Impedanzwerte Z der Phase mit erkannter Pendelung, z.B. der Phase 1, werden einer Pendelsignalrücksetzeinheit Pü zugeführt. Diese Pendelsignalrücksetzeinheit Pü erkennt ein Aufhören der Pendelung und gibt in diesem Fall an ihrem Ausgang ein Pendelrücksetzsignal Pr aus, welches das Speicherelement der jeweiligen Phase, z.B. Sp1, zurücksetzt. Damit wird auch das Pendelsignal der jeweiligen Phase, z.B. Pd1, nicht mehr ausgegeben, und der jeweilige Umschalter, z.B. U1, geht wieder in seine Ausgangsstellung zurück. Eine Einheit zur Phasenauswahl Pa sorgt auf eine Anregung hin dafür, daß von der Pendelungserkennungseinheit Pe und der Pendelsignalrücksetzeinheit Pü jeweils die Phasen-Impedanzwerte der auf Pendelung zu untersuchenden Phasen bearbeitet werden.

Im folgenden wird die Arbeitsweise der vier Einheiten Impedanzbestimmung Ib, Pendelungserkennungseinheit Pe, Pendelsignalrücksetzeinheit Pü und Phasenauswahl Pa näher erläutert.

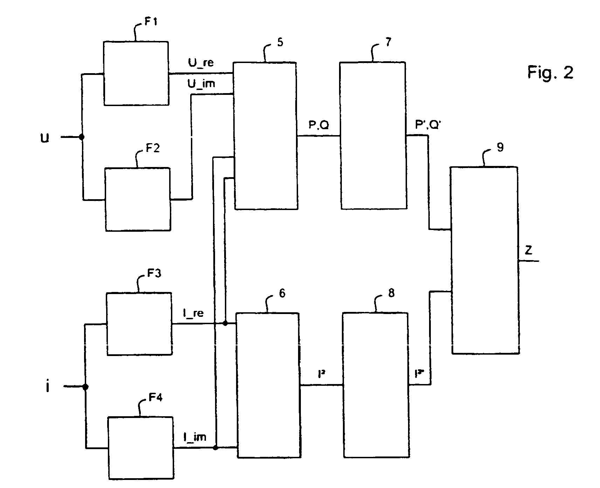

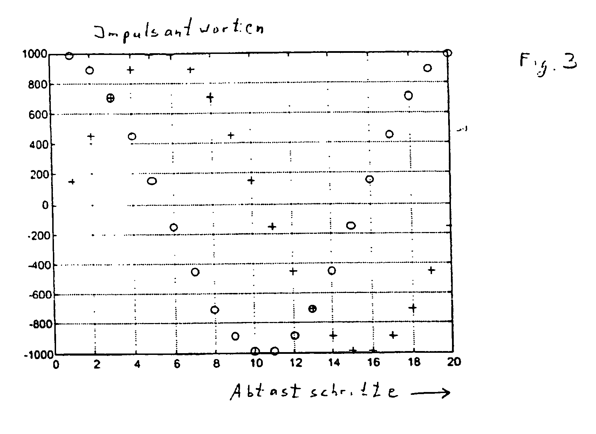

Entsprechend Fig. 2 werden in der Einheit Impedanzbestimmung Ib die Phasenstrom- und Phasenspannungsabtastwerten i und u mit Hilfe von orthogonalen FIR-Filtern F1, F2, F3 und F4 gefiltert und damit eine den Realteil der Phasenspannungsabtastwerte enthaltende Größe U_re, eine den Imaginärteil der Phasenspannungsabtastwerte enthaltende Größe U_im, eine den Realteil der Phasenstromabtastwerte enthaltende Größe I_re und eine den Imaginärteil der Phasenstromabtastwerte enthaltende Größe I_im erzeugt.

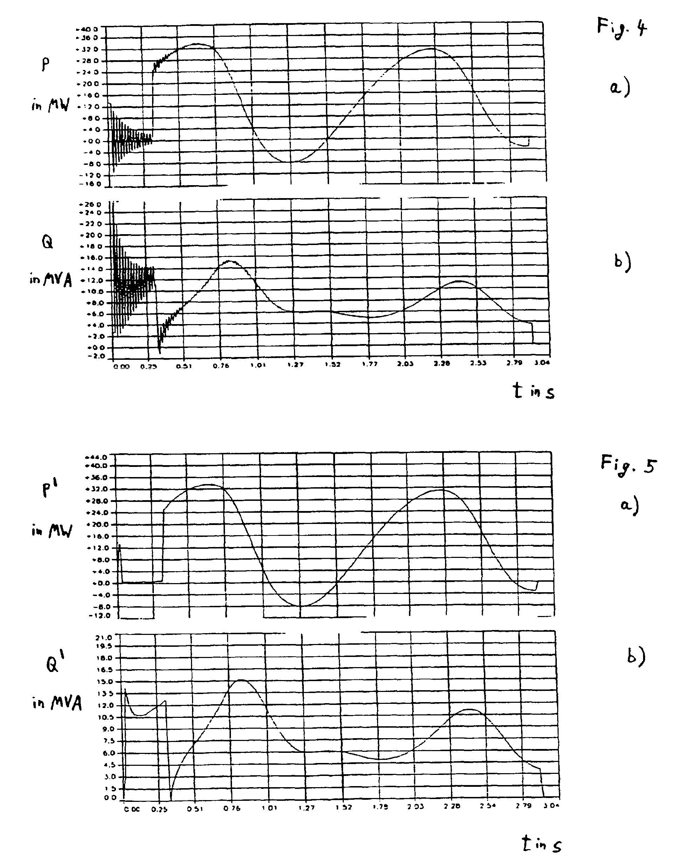

In Fig. 3 sind die Impulsantworten der Filter F1 bis F4 dargestellt, wobei die Impulsantwort der die Realteile bestimmenden Filter F1 und F3 mit "o" und die Impulsantwort der die Imaginärteile bestimmenden Filter F2 und F4 mit "+" gekennzeichnet sind.

Entsprechend Fig. 2 wird im Anschluß daran in Einheit 5 gemäß nachstehender Gl. (1) eine Phasen-Wirkleistungsgröße P und gemäß Gl. (2) eine Phasen-Blindleistungsgröße Q und in Einheit 6 gemäß G1. (3) eine quadrierte Phasenstromamplitudengröße I2 berechnet.

$$P = U\_re \cdot I\_re - U\_im \cdot I\_im \qquad (1)$$

$$Q = U\_im \cdot I\_re + U\_im \cdot I\_re \qquad (2)$$

$$I^2 = I\_re \cdot I\_re + I\_im \cdot I\_im \qquad (3)$$

Danach werden die Phasen-Wirkleistungsgröße P, die Phasen-Blindleistungsgröße Q und die quadrierte Pha-senstromamplitudengröße I2 in Einheiten 7 und 8 gefiltert, um die in diesen Größen enthaltenen störenden 50-Hz-Anteile zu entfernen; es entstehen die gefilterten Größen P', Q' und I2'. Das zu dieser Filterung benutzte Least-Squares-Abschätzverfahren wird weiter unten ausführlich erläutert.

Fig. 4 zeigt in einer oberen Darstellung a) den Verlauf der Wirkleistungsgröße P und in einer unteren Darstellung b) den Verlauf der Blindleistungsgröße Q vor der Filterung mittels Least-Squares-Abschätzverfahren jeweils über der Zeit t aufgetragen dargestellt.

Fig. 5 zeigt in einer oberen Darstellung a) den Verlauf der Wirkleistungsgröße P' und in einer unteren Darstellung b) den Verlauf der Blindleistungsgröße Q' nach der Filterung mittels Least-Squares-Abschätzverfahren; es ist deutlich zu erkennen, daß die 50-Hz-Anteile entfernt wurden.

Entsprechend Fig. 2 werden nach der Filterung in Einheit 9 Phasen-Resistanzwerte R und Phasen-Reaktanzwerte X gemäß Gl. (4) ermittelt und die daraus bestimmten Phasen-Impedanzwerte Z=R+jX am Ausgang der Einheit Impedanzbestimmung Ib ausgegeben.

$$R = P' / I^2' \qquad X = Q' / I^2' \qquad (4)$$

Zur Ausfilterung der in der Phasenwirkleistungsgröße P, der Phasen-Blindleistungsgröße Q und der quadrierten Phasenstromamplitudengröße I2 enthaltenden 50-Hz-Anteile wird ein Least-Squares-Abschätzverfahren mit einem Signalmodell entsprechend Gl. (5) auf jede der Größen P, Q und I2 getrennt angewandt.

$$y_k = A \cdot e^{-\frac{t}{\tau}} \cdot \sin(\omega_0 k \cdot T_A) + B \cdot e^{-\frac{t}{\tau}} \cdot \cos(\omega_0 k \cdot T_A) + C \qquad (5)$$

Das Abschätzverfahren berechnet aus der quadrierten Phasenstromamplitudengröße I2, der Phasen-Wirklei-stungsgröße P bzw. der Phasen-Blindleistungsgröße Q die Parameter A, B und C des Signalmodells. Der Parameter C liefert die gesuchte Größe der Phasen-Wirkleistungsgröße P', der Phasen-Blindleistungsgröße Q' bzw. der quadrierten Phasenstromamplitudengröße I2'. Die Summanden mit den Parametern A und B bilden die 50-Hz-Anteile nach. Die Größe ωo ist die auszufilternde Frequenz (50 Hz) und T_A ist die Abtastzeit.

Wenn für das Energieversorgungsnetz eine Ersatzschaltung mit nur zwei Generator-Maschinen an den Enden einer Energieübertragungsleitung betrachtet wird, klingt die Amplitude der 50-Hz-Anteile mit der Zeitkonstanten $\tau$ der Summenimpedanz zwischen den beiden Generator-Maschinen gemäß G1. (6) ab, wobei L die Schleifeninduktivität und R die Schleifenresistanz des Stromkreises, der sich über die beiden Generator-Maschinen schließt, ist.

$$\tau = \frac{\sum L}{\sum R} \qquad\qquad (6)$$

Die Koeffizienten A, B und C werden derart bestimmt, daß die Summe der Fehlerquadrate zwischen aus den Phasenstrom- und Phasenspannungsabtastwerten i und u bestimmten Werten y und den nach Gl. (5) berechneten Abtastwerten yk minimal wird (vgl. Gl. (7)).

$$J = \sum_{i=k-N}^{k}\left(y_i - h(\underline{\Theta}_k)\right)^2 \rightarrow \text{MIN} \qquad\qquad (7)$$

In Gl. (7) stellt J das zu minimierende Gütekriterium dar. Als Funktion $h(\underline{\Theta}_k)$ wird das in Gl. (5) angegebene Signalmodell eingesetzt. Die zu bestimmenden Parameter A, B und C bilden einen Vektor $\underline{\Theta}_k$, gemäß Gl. (8).

$$\underline{\Theta}_k = \begin{pmatrix} A \\ B \\ C \end{pmatrix} \qquad\qquad (8)$$

Zur Lösung der Minimierungsaufgabe wird das Gütekriterium J nach dem Parameter-Vektor $\underline{\Theta}_k$ abgeleitet. Für das Signalmodell nach Gl. (5) erhält man dann Gl. (9) mit Gl. (10).

$$0 = \sum_{i=k-N}^{k} 2\underline{\gamma}_i^{T}\left(y_i - \underline{\gamma}_i \underline{\Theta}_k\right) \qquad\qquad (9)$$

$$\underline{\gamma}_i^k = \frac{\partial h}{\partial \Theta_k} \qquad\qquad \underline{\gamma}_i^k = \begin{pmatrix} \sin\left(\frac{2\pi}{T} iT_A\right) \cdot e^{\frac{iT_A}{\tau}} \\ \cos\left(\frac{2\pi}{T} iT_A\right) \cdot e^{\frac{iT_A}{\tau}} \\ 1 \end{pmatrix} \qquad\qquad (10)$$

Löst man Gl. (9) nach dem Vektor $\underline{\Theta}_k$ auf, so entsteht die G1. (11), mit der unter Nutzung der in den G1. (12) und (13) angegebenen Matrix $\underline{S}_k$ der Vektor $\underline{\Theta}_k$ ermittelt wird.

$$\underline{\Theta}_k = \underline{S}_k^{-1} \sum_{i=1}^{k} \underline{\gamma}_i^{T} y_i \qquad\qquad (11)$$

$$\underline{S}_k = \sum_{i=k-N}^{k} \underline{\gamma}_i^T \underline{\gamma}_i \qquad (12)$$

$$\underline{S}_k = \begin{pmatrix} \sin^2\left(\dfrac{2\pi}{T}iT_A\right)\cdot e^{-\frac{iT_A}{\tau}} & \sin\left(\dfrac{2\pi}{T}iT_A\right)\cos\left(\dfrac{2\pi}{T}iT_A\right)\cdot e^{-\frac{iT_A}{\tau}} & \sin\left(\dfrac{2\pi}{T}iT_A\right)\cdot e^{-\frac{iT_A}{\tau}} \\[2em] \cos\left(\dfrac{2\pi}{T}iT_A\right)\sin\left(\dfrac{2\pi}{T}iT_A\right)\cdot e^{-\frac{iT_A}{\tau}} & \cos^2\left(\dfrac{2\pi}{T}iT_A\right)\cdot e^{-\frac{iT_A}{\tau}} & \cos\left(\dfrac{2\pi}{T}iT_A\right)\cdot e^{-\frac{iT_A}{\tau}} \\[2em] \sin\left(\dfrac{2\pi}{T}iT_A\right)\cdot e^{-\frac{iT_A}{\tau}} & \cos\left(\dfrac{2\pi}{T}iT_A\right)\cdot e^{-\frac{iT_A}{\tau}} & 1 \end{pmatrix}$$

$$(13)$$

Von den im Vektor $\underline{\Theta}_k$ enthaltenden Parametern A, B und C wird nur der Parameter C ausgewertet. Die Vektoren $\underline{\gamma}_i^k$ nach Gl. (10) und die Matrix $\underline{S}_k$ nach Gl. (13) werden berechnet und als Konstanten abgelegt, so daß sie für alle Durchläufe des Verfahrens zur Verfügung stehen.

In der Pendelungserkennungseinheit Pe werden für die Erkennung des Pendelvorganges Monotoniekriterien auf die Bahnkurven der Impedanzwerte in der Impedanzebene angewandt. Dieses Verfahren für die Erkennung des Pendelvorganges an sich ist bekannt und in dem deutschen Patent DE 197 46 719 C1 beschrieben.

In der Pendelsignalrücksetzeinheit Pü wird festgestellt, ob eine bereits erkannte Pendelung noch anhält. Zu diesem Zweck wird aus vergangenen, zur Pendelung gehörenden Phasen-Impedanzwerten Z ein Pendel-Modell erzeugt. Anschließend wird überprüft, ob die durch die neu ermittelten Phasen-Impedanzwerte Z beschriebene Bahnkurve noch dem Pendel-Modell entspricht. Bei der Erzeugung des Pendel-Modells wird davon ausgegangen, daß die Bahnkurve frei von Sprüngen ist und ihre Richtung nur sehr langsam ändert. Im vorliegenden Ausführungsbeispiel wird die Bahnkurve durch eine Potenzfunktion erster Ordnung, also eine Geradengleichung, gemäß Gl. (14) beschrieben.

$$X(R) = m \cdot R + X_0 \qquad (14)$$

Die Parameter m und X0 werden mittels eines nichtrekursiven Least-Squares-Schätzverfahrens aus den letzten N ermittelten Phasen-Impedanzwerten Z bestimmt.

Die Geradengleichung wird als Modellansatz für das Least-Squares-Schätzverfahren verwendet, der Parameter m charakterisiert die Steigung und der Parameter XO den Offset der Geradengleichung. Aus den letzten ermittelten Wertepaaren $(R_i, X_i)$ der Phasen-Impedanzwerte $Z_i$ werden für das Modell nach Gl. (14) die Parameter m und XO so bestimmt, daß die Summe der Fehlerquadrate zwischen den aus den gemessenen Phasenstrom- und Phasenspannungsabtastwerten i und u ermittelten Werten $X_i$ und den nach Gl. (14) berechneten Werten X minimal wird (s. Gl. (15)).

$$J = \sum_{i=k-N}^{k} \left(X_i - h(\underline{\Theta}_k)\right)^2 \rightarrow \mathrm{MIN} \qquad (15)$$

In Gl. (15) ist J das zu minimierende Gütekriterium, als Funktion $h(\underline{\Theta}_k)$ wird der Modellansatz gemäß Gl.(14) eingesetzt. Entsprechend Gl. (16) enthält der Parametervektor $\underline{\Theta}_k$ die zu bestimmenden Parameter m und X0 des Modellansatzes.

$$\underline{\Theta}_k = \begin{pmatrix} m \\ X_0 \end{pmatrix} \qquad (16)$$

Zur Lösung der Minimierungsaufgabe muß das Gütekriterium J nach dem Parametervektor $\underline{\Theta}_k$ abgeleitet werden. Für das Signalmodell nach Gl. (14) erhält man dann die Gleichungen (17) und (18).

$$0 = \sum_{i=k-N}^{k} 2\underline{\gamma}_i^T \left( X_i - h(\underline{\Theta}_k)_i \right) \tag{17}$$

$$\underline{\gamma}_i^k = \frac{\partial h}{\partial \Theta_k} = \begin{pmatrix} R \\ 1 \end{pmatrix} \tag{18}$$

Löst man Gl. (17) nach dem Parametervektor $\underline{\Theta}_k$ auf, so entsteht Gl. (19) zur Ermittlung des Parametervektors $\underline{\Theta}_k$.

$$\underline{\Theta}_k = \underline{S}_k^{-1} \sum_{i=1}^{k} \underline{\gamma}_i^T y_i \tag{19}$$

mit

$$\underline{S}_k = \sum_{i=k-N}^{k} \underline{\gamma}_i^T \underline{\gamma}_i \tag{20}$$

$$\underline{S}_k = \sum_{i=k-N}^{k} \begin{pmatrix} R_i^2 & R_i \\ R_i & 1 \end{pmatrix} \tag{21}$$

Nach Einsetzen der Parameter in Gl. (14) erhält man das geschätzte Pendel-Modell. Entspricht ein neu bestimmter Phasen-Impedanzwert Z dem Pendel-Modell, d. h. liegt er in einem Toleranzband um die durch Gl. (14) dargestellte Geradengleichung, so wird ein Anhalten der Pendelung erkannt. Liegt der neu bestimmte Phasen-Impedanzwert Z außerhalb des Toleranzbandes, so wird das Aufhören der Pendelung erkannt und am Ausgang der Pendelsignalrücksetzeinheit Pü ein Pendelrücksetzsignal Pr für das Speicherelement Sp1,Sp2 oder Sp3 der jeweiligen Phase ausgegeben.

Die Einheit Phasenauswahl Pa erhält beispielsweise von einem nicht dargestellten Distanzschutz eine Anregung. Entsprechend der Art der angeregten Schleife ermittelt sie die Phasen, für die die Pendelungserkennungseinheit Pe bzw. die Pendelsignalrücksetzeinheit Pü eine Untersuchung des Pendelverhaltens durchführen soll. Eine Zuordnung der angeregten Schleifen zu den Phasen ist in der folgenden Tabelle angegeben.

| angeregte Schleifen | auf Pendelverhalten zu untersuchende Phasen |
|---|---|
| L1E | L1 |
| L2E | L2 |
| L3E | L3 |
| L12 | L1 und L2 |
| L23 | L2 und L3 |
| L31 | L1 und L3 |

**Patentansprüche**

1. Verfahren zum Erzeugen von mindestens einem eine Pendelung in einem elektrischen Energieversorgungsnetz anzeigenden Signal (Pendelsignal Pd), bei dem

   - von mindestens einer Phase des Energieversorgungsnetzes jeweils Phasenstrom und Phasenspannung unter Bildung von Phasenstrom- und Phasenspannungsabtastwerten (i, u) abgetastet werden,
   - aus den Phasenstrom- und Phasenspannungsabtastwerten Impedanzwerte gebildet werden,
   - die Impedanzwerte auf das Vorliegen einer Pendelung hin überwacht werden und bei Erkennung einer Pendelung mindestens ein Speicherelement (Sp) gesetzt und an dessen Ausgang das Pendelsignal (Pd) ausgegeben wird,
   - nach Setzen des Speicherelementes (Sp) weitere Impedanzwerte dahingehend überprüft werden, ob die festgestellte Pendelung noch anhält,
   - bei Anhalten der Pendelung das Speicherelement (Sp) unbeeinflußt bleibt und beim Aufhören der Pendelung das Speicherelement zurückgesetzt wird,

   **dadurch gekennzeichnet, daß**

   - bei der Überprüfung der weiteren Impedanzwerte ein Pendel-Modell benutzt wird, das aus vergangenen, zur Pendelung gehörenden Impedanzwerten oder aus von diesen Impedanzwerten abhängigen Größen gebildet ist,
   - überprüft wird, ob ein aktuell gebildeter weiterer Impedanzwert oder eine von diesem weiteren Impedanzwert abhängige Größe vom Pendel-Modell abweicht und
   - ein Auftreten eines weiteren Impedanzwertes oder einer von diesem Impedanzwert abhängigen Größe, welche von dem Pendel-Modell abweichen, als ein Aufhören der Pendelung gewertet wird.

2. Verfahren nach Anspruch 1,
   **dadurch gekennzeichnet, daß**
   das Pendel-Modell mittels eines Least-Squares-Schätzverfahrens ermittelt wird.

3. Verfahren nach Anspruch 2,
   **dadurch gekennzeichnet, daß** als Modellansatz für das Pendel-Modell

   - eine Funktion der Form $f(x)=ax^3+bx^2+cx+d$ mit den Parametern a, b, c und d, bei der ein oder mehrere Parameter von vornherein als Null festgelegt werden können oder
   - eine Summe aus abklingenden Sinus- und Cosinusfunktionen verwendet wird.

4. Verfahren nach einem der Ansprüche 1 bis 3,
   **dadurch gekennzeichnet, daß**
   als von den Impedanzwerten abhängige Größe Resistanzwerte (R) verwendet werden.

5. Verfahren nach einem der Ansprüche 1 bis 3,
   **dadurch gekennzeichnet, daß**
   als von den Impedanzwerten abhängige Größe Reaktanzwerte (X) verwendet werden.

6. Verfahren nach einem der Ansprüche 1 bis 3,
   **dadurch gekennzeichnet, daß**
   als von den Impedanzwerten abhängige Größe zeitliche Ableitungswerte (dZ/dt) der Impedanz verwendet werden.

7. Verfahren nach einem der Ansprüche 1 bis 3,
   **dadurch gekennzeichnet, daß**
   als von den Impedanzwerten abhängige Größe zeitliche Ableitungswerte (dR/dt) einer Resistanz verwendet werden.

8. Verfahren nach einem der Ansprüche 1 bis 3,
   **dadurch gekennzeichnet, daß**
   als von den Impedanzwerten abhängige Größe zeitliche Ableitungswerte (dX/dt) einer Reaktanz verwendet werden.

9. Verfahren nach einem der Ansprüche 1 bis 8,
   **dadurch gekennzeichnet, daß**

aus den Phasenstrom- und Phasenspannungsabtastwerten (i, u) Mitsystemimpedanzwerte gebildet werden und für alle Phasen des Energieversorgungsnetzes ein gemeinsames Speicherelement (Sp) bereitgestellt und ein gemeinsames Pendelsignal (Pd) erzeugt wird.

**10.** Verfahren nach einem der Ansprüche 1 bis 8,
**dadurch gekennzeichnet, daß**
aus den Phasenstrom- und Phasenspannungsabtastwerten (i, u) jeweils einer auf Pendelung zu untersuchenden Phase des Energieversorgungsnetzes Phasen-Impedanzwerte gebildet werden und für jede dieser Phasen ein eigenes Speicherelement (Sp) bereitgestellt und ein eigenes Pendelsignal (Pd) erzeugt wird.

**11.** Verfahren nach Anspruch 10,
**dadurch gekennzeichnet, daß** zur Bildung der Phasen-Impedanzwerte

- aus den Phasenstrom- und Phasenspannungsabtastwerten (i, u) der jeweiligen Phase eine den Realteil der Phasenspannungsabtastwerte enthaltende Größe U_re, eine den Imaginärteil der Phasenspannungsabtastwerte enthaltende Größe U_im, eine den Realteil der Phasenstromabtastwerte enthaltende Größe I_re und eine den Imaginärteil der Phasenstromabtastwerte enthaltende Größe I_im erzeugt wird,
- eine Phasen-Wirkleistungsgröße P gemäß
$P = U\_re \cdot I\_re - U\_im \cdot I\_im$ ermittelt wird,
- eine Phasen-Blindleistungsgröße Q gemäß
$Q = U\_im \cdot I\_re + U\_im \cdot I\_re$ ermittelt wird,
- eine quadrierte Phasenstromamplitudengröße $I^2$ gemäß
$I^2 = I\_re \cdot I\_re + I\_im \cdot I\_im$ ermittelt wird,
- mittels jeweils eines Least-Squares-Abschätzverfahrens netzfrequente Anteile aus der Phasen-Wirkleistungsgröße P, der Phasen-Blindleistungsgröße Q und der quadrierten Phasenstromamplitudengröße $I^2$ entfernt werden und
- Phasen-Resistanzwerte R gemäß $R=P/I^2$ sowie Phasen-Reaktanzwerte X gemäß $X=Q/I^2$ und damit Phasen-Impedanzwerte $Z=R+jX$ ermittelt werden.

## Claims

**1.** Method for producing at least one signal (oscillation signal Pd), which indicates an oscillation in an electrical power supply system, in which method

- the phase current and the phase voltage are in each case sampled from at least one phase of the power supply system, forming phase current and phase voltage sample values (i, u),
- impedance values are formed from the phase current and phase voltage sample values,
- the impedance values are monitored for the presence of any oscillation and, if an oscillation is identified, at least one memory element (Sp) is set, and the oscillation signal (Pd) is output at its output,
- after setting the memory element (Sp), further impedance values are checked to determine whether the oscillation that has been found is still continuing,
- the memory element (Sp) remains uninfluenced if the oscillation continues, and the memory element is reset if the oscillation has stopped,

**characterized in that**

- the check of the further impedance values makes use of an oscillation model which is formed from previous impedance values associated with the oscillation, or from variables which are dependent on these impedance values,
- a check is carried out to determine whether a further impedance value formed at that time or a variable which is dependent on this further impedance value differs from the oscillation model, and
- any occurrence of a further impedance value or of a variable dependent on this impedance value which differs from the oscillation model is assessed as the oscillation having stopped.

**2.** Method according to Claim 1,
**characterized in that**
the oscillation model is determined by means of a least squares estimation method.

**3.** Method according to Claim 2,
**characterized in that**

- a function in the form f(x) = $ax^3+bx^2+cx+d$ with the parameters a, b, c and d, in which one or more parameters can be defined to be zero from the start, or
- a sum of decaying sine and cosine functions is used as the model rule for the oscillation model.

**4.** Method according to one of Claims 1 to 3,
**characterized in that**
resistance values (R) are used as the variable dependent on the impedance values.

**5.** Method according to one of Claims 1 to 3,
**characterized in that**
reactance values (X) are used as the variable dependent on the impedance values.

**6.** Method according to one of Claims 1 to 3,
**characterized in that**
time derivative values (dZ/dt) of the impedance are used as the variable dependent on the impedance values.

**7.** Method according to one of Claims 1 to 3,
**characterized in that**
time derivative values (dR/dt) of a resistance are used as the variable dependent on the impedance values.

**8.** Method according to one of Claims 1 to 3,
**characterized in that**
time derivative values (dX/dt) of a reactance are used as the variable dependent on the impedance values.

**9.** Method according to one of Claims 1 to 8,
**characterized in that**
positive phase sequence system impedance values are formed from the phase current and phase voltage sample values (i, u), and a common memory element (Sp) is provided, and a common oscillation signal (Pd) is produced, for all the phases in the power supply system.

**10.** Method according to one of Claims 1 to 8,
**characterized in that**
phase impedance values are formed from the phase current and phase voltage sample values (i, u) of each phase of the power supply system to be investigated for oscillation, and a dedicated memory element (Sp) is provided, and a dedicated oscillation signal (Pd) is produced, for each of these phases.

**11.** Method according to Claim 10,
**characterized in that**
in order to form the phase impedance values,

- a variable U_re containing the real part of the phase voltage sample values, a variable U_im containing the imaginary part of the phase voltage sample values, a variable I_re containing the real part of the phase current sample values and a variable I_im containing the imaginary part of the phase current sample values are formed from the phase current and phase voltage sample values (i, u) for each phase,
- a phase real power variable P is determined from
P = U_re·I_re - U_im·I_im
- a phase wattless component variable Q is determined from Q
= U_im·I_re + U_im·I_re
- a squared phase current amplitude variable $I^2$ is determined from $I^2$ = I_re·I_re + I_im·I_im
- system-frequency components are in each case removed by means of a least squares estimation method from the phase real power variable P, from the phase wattless component variable Q and from the squared phase current amplitude variable $I^2$, and
- phase resistance values R are determined from R=P/$I^2$ and phase reactance values X are determined from X=Q/$I^2$, and phase impedance values Z=R+jX are thus determined.

**Revendications**

1. Procédé de production d'au moins un signal (signal pendulaire Pd) indiquant une oscillation pendulaire dans un réseau d'alimentation en électricité, dans lequel

   - on échantillonne d'au moins une phase du réseau d'alimentation en électricité respectivement un courant de phase et une tension de phase en formant des valeurs (i, u) d'échantillonnage de courant de phase et de tension de phase,
   - on forme des valeurs d'impédance à partir des valeurs d'échantillonnage de courant de phase et de tension de phase,
   - on contrôle les valeurs d'impédance du point de vue de la présence d'une oscillation pendulaire et si l'on reconnaît une oscillation pendulaire, on active au moins un élément (Sp) accumulateur et on émet le signal (Pd) pendulaire à sa sortie,
   - après avoir activé l'élément (Sp) accumulateur, on contrôle d'autres valeurs d'impédance pour savoir si le signal pendulaire constaté se maintient encore,
   - si le signal pendulaire se maintient, on laisse intact l'élément (Sp) accumulateur et si le signal pendulaire cesse, on remet l'élément accumulateur à l'état initial,

   **caractérisé en ce que**

   - lors du contrôle des autres valeurs d'impédance, on utilise un modèle pendulaire qui est formé à partir de valeurs d'impédance passées appartenant au signal pendulaire ou à partir de grandeurs qui dépendent de ces valeurs d'impédance,
   - on contrôle si une autre valeur d'impédance formée instantanément ou si une grandeur dépendant de cette autre valeur d'impédance s'écarte du modèle pendulaire et
   - on évalue l'apparition d'une autre valeur d'impédance ou d'une grandeur qui dépend de cette valeur d'impédance, qui s'écarte du modèle pendulaire, comme une cessation du signal pendulaire.

2. Procédé suivant la revendication 1,
   **caractérisé en ce que** l'on détermine le modèle pendulaire au moyen d'un procédé d'estimation par les moindres carrés.

3. Procédé suivant la revendication 2,
   **caractérisé en ce que** l'on utilise comme équation du modèle pendulaire

   - une fonction de la forme $f(x) = ax^3 + bx^2 + cx + d$ ayant les paramètres a, b, c et d, un ou plusieurs paramètres pouvant être fixés d'emblée à zéro ou
   - une somme de fonctions sinus et cosinus décroissante.

4. Procédé suivant l'une des revendications 1 à 3,
   **caractérisé en ce que** l'on utilise les valeurs (R) de résistance comme grandeur dépendant des valeurs d'impédance.

5. Procédé suivant l'une des revendications 1 à 3,
   **caractérisé en ce que** l'on utilise des valeurs (X) de réactance comme grandeur dépendant des valeurs d'impédance.

6. Procédé suivant l'une des revendications 1 à 3,
   **caractérisé en ce que** l'on utilise des valeurs (dZ/dt) de l'impédance dérivée en fonction du temps comme grandeur dépendant des valeurs d'impédance.

7. Procédé suivant l'une des revendications 1 à 3,
   **caractérisé en ce que** l'on utilise des valeurs (dR/dt) d'une dérivée d'une résistance dérivée en fonction du temps comme grandeur dépendant des valeurs d'impédance.

8. Procédé suivant l'une des revendications 1 à 3,
   **caractérisé en ce que** l'on utilise des valeurs (dX/dt) d'une dérivée d'une réactance en fonction du temps comme grandeur dépendant des valeurs d'impédance.

9. Procédé suivant l'une des revendications 1 à 8,
**caractérisé en ce que** l'on forme des valeurs d'impédance de système à partir des valeurs (i, u) du courant de phase de la tension de phase et on met à disposition pour toutes les phases du réseau d'alimentation en électricité un élément (Sp) accumuateur commun et on produit un signal (Pd) pendulaire commun.

10. Procédé suivant l'une des revendications 1 à 8,
**caractérisé en ce que** l'on forme des valeurs d'impédance de phase à partir des valeurs (i, u) d'échantillonnage de courant de phase et de tension de phase de respectivement une phase, dont on analyse l'oscillation pendulaire, du réseau d'alimentation en électricité et pour chacune de ces phases on met à disposition un élément (Sp) accumulateur propre et on produit un signal (Pd) pendulaire propre.

11. Procédé suivant la revendication 10,
**caractérisé en ce que** pour la formation des valeurs d'impédance de phase

- on produit à partir des valeurs (i, u) d'échantillonnage de courant de phase et de tension de phase de la phase respective, une grandeur U_re contenant la partie réelle des valeurs d'échantillonnage de la tension de phase, une grandeur U_im contenant la partie imaginaire des valeurs d'échantillonnage de la tension de phase, U_re contenant la partie réelle des valeurs d'échantillonnage du courant de phase et une grandeur I_im contenant la partie imaginaire des valeurs d'échantillonnage du courant de phase,
- on détermine une grandeur P de puissance active de charge suivant $P = U\_re.I\_re - U\_im.I\_im$,
- on détermine une grandeur Q de puissance réactive de phase suivant $Q = U\_im \cdot I\_re + U\_im \cdot I\_re$,
- on détermine une grandeur $I^2$ d'amplitude du courant de phase au carré suivant $I^2 = I\_re \cdot I\_re + I\_im \cdot I\_im$,
- au moyen de respectivement un procédé d'estimation par les moindres carrés, on élimine des composantes de fréquence du réseau de la grandeur P de puissance active de la phase, de la grandeur Q de puissance réactive de la phase et de la grandeur $I^2$ de l'amplitude du courant de phase au carré, et
- on détermine des valeurs R de la résistance de phase suivant $R=P/I^2$ ainsi que des valeurs X de réactance de phase suivant $X=Q/I^2$ et ainsi des valeurs d'impédance de phase $Z=R+jX$.

U1,U2,U3  Pe

Ib

i,u — 3 — Impedanz-bestimmung — Z — 3 — Pendelungserkennungs-einheit — 3 — Ps

Sp1,Sp2,Sp3

S

Q — 3 — Pd1 Pd2 Pd3

Pa

Anregung → Phasenauswahl — 3

Pü

Pendelsignalrücksetz-einheit — 3 — Pr

Rs

3

Fig. 1

EP 1 219 001 B1

Fig. 2

Impulsantworten

Fig. 3

Abtastschritte ⟶

Fig. 4

a)

b)

t in s

Fig. 5

a)

b)

t in s